# DEMANDE DE BREVET EUROPEEN

(11) **EP 4 390 971 A2**
(43) Date de publication de la demande: **26.06.2024**
(21) Numéro de dépôt: 23216752.8
(22) Date de dépôt: 14.12.2023
(51) Int. Cl.: G21C 15/18, G21C 1/02, G21C 3/54, G21C 13/10, G21C 1/32, G21C 1/03

(54) **RÉACTEUR NUCLÉAIRE À SEL(S) FONDU(S), DE TYPE À NEUTRONS RAPIDES, À CUVE REMPLIE DE SELS LIQUIDE INERTE AUTOUR DE LA CUVE DE RÉACTEUR EN TANT QUE SYSTÈME D`ÉVACUATION DE LA PUISSANCE RÉSIDUELLE DU RÉACTEUR (EPUR)**

(30) Priorité: 19.12.2022 FR 2213885
(71) Demandeur: Commissariat à l'énergie atomique et aux énergies alternatives, 75015 Paris (FR)
(72) Inventeur: CAMPIONI, Guillaume, 75020 PARIS (FR); GERSCHENFELD, Antoine, 92120 MONTROUGE (FR); PASCAL, Vincent, 83560 VINON SUR VERDON (FR); GORSSE, Yannick, 91190 GIF SUR YVETTE (FR)
(74) Mandataire: Cabinet Nony

(57) **Abrégé**

L'invention consiste essentiellement à réaliser un réacteur nucléaire à sel(s) fondu(s) de type à neutrons rapides, dont l'architecture avec une cuve de réacteur exempte de modérateur ou tout du moins d'un modérateur permettant de qualifier un réacteur en tant que réacteur à neutrons thermiques, de forme axisymétrique entourée par une autre cuve à la périphérie de la cuve de réacteur qui délimite un espace inter-cuves rempli d'un sel liquide inerte qui sert de fluide caloporteur pour l'évacuation de la puissance résiduelle du réacteur par conduction à travers la cuve de réacteur.

## Description

### Domaine technique

La présente invention concerne le domaine des réacteurs nucléaires à sel(s) fondu(s) (acronyme RSF ou MSR acronyme anglais pour « Molten Salt Reactor »). Plus particulièrement, elle concerne le domaine des réacteurs MSR dits de petite ou moyenne puissance ou AMR en anglais (acronyme de « Advanced Modular Reactor »),

L'invention a ainsi pour objectif principal de trouver une solution d'amélioration de de tels réacteurs, plus particulièrement ceux à neutrons rapide, pour permettre une évacuation de la puissance résiduelle d'un réacteur de type AMR.

Par « réacteur à sel(s) fondu(s)», on entend ici et dans le cadre de l'invention, le sens technologique usuel, à savoir un réacteur nucléaire dans lequel le combustible nucléaire se présente sous forme liquide, dissous dans un sel fondu, à une température typiquement comprise entre 500 et 900 °C, qui joue à la fois le rôle de caloporteur et de première barrière de confinement à fission.

Bien que décrite en relation avec une architecture de circuit primaire par convection naturelle, l'invention s'applique à tout réacteur nucléaire à sel(s) fondu(s), de type à neutrons rapides dont la cuve de réacteur est axisymétrique et comprend une portion cylindrique sur la majeure partie de la hauteur.

### Technique antérieure

Les réacteurs à sel(s) fondu(s) reposent sur l'utilisation d'un sel fondu, par exemple de fluorure de lithium (LiF) et de fluorure de béryllium (BeF2), ou encore de chlorure de sodium (NaCl) et de magnésium (MgCl2), servant à la fois de fluide caloporteur et de modérateur en tant que fluide primaire au sein de la cuve de réacteur, qui est métallique ou céramique, telle qu'en SiC.

La cuve contient le sel fondu à haute température, typiquement entre 600 à 900 °C, généralement à pression ambiante.

Le combustible fissile peut être de l'uranium 235, du plutonium ou de l'uranium 233, issus de la conversion du thorium. Un réacteur à sel(s) fondu(s) peut assurer lui-même sa surgénération à l'aide d'une couverture fertile contenant l'isotope fertile à irradier.

La réaction nucléaire est déclenchée par la concentration en matière fissile du combustible au sein de la cuve de réacteur ou par le passage dans un bloc modérateur en graphite.

Un réacteur à sel(s) fondu(s) peut donc être modéré par du graphite, produisant des neutrons thermiques, ou sans modérateur produisant neutrons rapides.

La présence ou non de modérateurs définit ainsi les deux grandes familles de réacteurs à sel(s) fondu(s), respectivement à neutrons thermiques et à neutrons rapides.

À partir des années 2000, les réacteurs à sel(s) fondu(s), ont été évalué, puis retenus dans le cadre du Forum international Génération IV. Ils font l'objet désormais de recherches en vue d'un déploiement comme réacteurs de quatrième génération, notamment en tant que petits réacteurs modulaires (SMR) qui sont des réacteurs nucléaires avancés (acronyme anglo-saxon AMR pour « Advanced Nuclear Reactors »), dont la capacité de puissance peut aller jusqu'à 300 MWe par unité: [1].

Dans les réacteurs nucléaires, les fonctions fondamentales de sûreté qui doivent être assurées en toutes circonstances (fonctionnement normal, incidentel et accidentel) sont le confinement, la maîtrise de la réactivité et l'évacuation de la puissance thermique du coeur.

Pour l'évacuation de la puissance résiduelle en situation accidentelle, il est constamment recherché l'amélioration de la passivité et la diversification des systèmes pour garantir une meilleure fiabilité globale. L'objectif est de préserver l'intégrité des structures et de leur géométrie en toutes circonstances, à savoir les première et deuxième (cuve principale) barrières de confinement, et ce même en cas de manque de tension électrique généralisée sur une longue durée, qui correspond à un scénario de type Fukushima.

Plus particulièrement, l'évacuation de la puissance résiduelle d'un réacteur à métal liquide de manière totalement passive au travers la cuve principale est actuellement envisagée. Si cet objectif apparaît non atteignable en totalité pour un réacteur de grosse taille, à cause de la puissance trop élevée, il peut être considéré de manière réaliste pour les réacteurs AMR de petite puissance afin de garantir une amélioration intrinsèque de la sûreté et des systèmes d'évacuation de la puissance résiduelle, ci-après dénommés systèmes d'EPuR, au travers de la cuve principale.

Les réacteurs de type à sel(s) fondu(s), de type à neutrons rapides sont également concernés par une évacuation de leur puissance résiduelle. Différentes solutions ont déjà été envisagées. On pourra se référer à la publication [2] propose une solution. Aucune d'entre elles n'est complètement satisfaisante.

Il existe donc un besoin pour améliorer les réacteurs de type à sel(s) fondu(s), de type à neutrons rapides, notamment lorsqu'ils sont envisagés en tant que réacteurs AMR, afin de pouvoir évacuer leur puissance résiduelle de manière satisfaisante.

Le but de l'invention est donc de répondre au moins en partie à ce besoin.

### Exposé de l'invention

Pour ce faire, l'invention concerne, sous l'un de ses aspects, un réacteur nucléaire à sel(s) fondu(s), de type à neutrons rapides, comprenant :
- une cuve de réacteur axisymétrique autour d'un axe central, délimitant intérieurement un circuit primaire de combustible sous forme liquide dans laquelle est fondu au moins un sel, l'intérieur de la cuve étant dénué de matériau modérateur;
- une autre cuve, agencée autour de la cuve de réacteur en définissant un espace inter-cuves (E) rempli d'un sel liquide inerte.

Par « sel liquide inerte », on entend un liquide caloporteur ne comprenant ni élément fissile, ni élément fertile.

Selon une première variante de réalisation, le sel liquide est choisi parmi le NaCl, MgCl, KCl, ZnCl₂, PbCl₂ ou un mélange de ceux-ci.

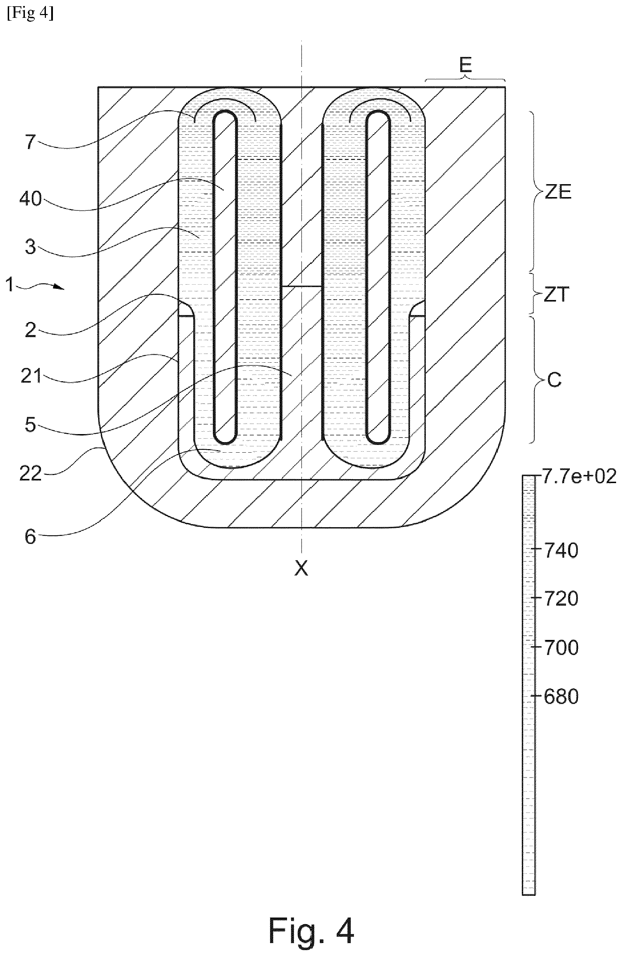

Dans le cadre de l'invention, on entend par « dénué de matériau modérateur », tout matériau qui permet de qualifier un réacteur nucléaire étant que réacteur nucléaire à neutrons thermiques. Au sens usuel, l'énergie cinétique d'un neutron rapide est supérieur à 1eV, tandis que celle d'un neutron thermique est inférieur à 1eV, typiquement de l'ordre de 0,025eV. On pourra se référer à la publication [3], et en particulier la figure 4, qui indique, pour plusieurs types de réacteurs, la fraction thermique et la fraction rapide du flux neutronique.

Ainsi, un réacteur à sel(s) fondu(s) selon l'invention est qualifié de neutrons rapides.

Typiquement, un réacteur à sel(s) fondu(s) selon l'invention peut présenter une fraction de neutrons thermiques de 0 à 0,05 et une fraction rapide de 0,6 à 0,65.

Selon un mode de réalisation avantageux, le réacteur comprend en outre :
- au moins un échangeur de chaleur entre le circuit primaire du réacteur et un circuit secondaire, agencé à l'intérieur de la cuve de réacteur ;
- une première virole sous la forme d'au moins un cylindre creux, d'axe central confondu avec celui de la cuve de réacteur, la première virole étant agencée dans la cuve de réacteur pour séparer l'intérieur de celle-ci en une zone centrale et une zone périphérique dans laquelle est agencé l'échangeur de chaleur de sorte qu'en fonctionnement du réacteur, le liquide combustible à sel(s) fondu(s), circule par convection naturelle selon une boucle depuis le bas de la zone centrale définissant le coeur de réacteur au sein duquel les réactions de fission se produisent, à partir duquel il s'élève par échauffement jusqu'au haut de la zone centrale où il est dévié vers le haut de la zone périphérique pour traverser l'échangeur puis descend vers le bas de la zone périphérique où il est dévié vers le coeur du réacteur ;
- un réflecteur neutronique, agencé à la périphérie du coeur contre la cuve de réacteur, pour assurer le maintien du flux neutronique dans le coeur.

Selon une première alternative,
- le liquide combustible à sel(s) fondu(s) du circuit primaire étant un mélange de NaCl-UCl3, de préférence en proportions de 25 à 30% mol pour l'UCl3, et de PuCl3, de préférence en proportions de 5 à 30% mol, en tant que sels, avec de l'uranium appauvri.
- la partie de la première virole agencée au-dessus de l'(des) échangeur(s) est un anneau cylindrique fermé sur lui-même tandis que la partie agencée au-dessous de l'(des) échangeur(s) est un cylindre creux,
- le réflecteur neutronique est en carbure de silicium (SiC).
- le liquide combustible à sel(s) fondu(s) du circuit primaire étant un mélange de NaCl-UCl3, de préférence à 34% mol, en tant que sel avec de l'uranium enrichi U235 (HALEU), de préférence en proportions de 5 à 20%.
- la première virole est un anneau cylindrique fermé sur lui-même,
- le réflecteur neutronique est graphite.

Grâce ce réservoir de sel inerte, cela permet d'évacuer la puissance résiduelle du réacteur de manière passive, uniquement par conduction à travers la cuve de réacteur, qui est de petites dimensions, de type modulaire SMR, ce qui correspond typiquement à des puissances inférieures à 300 MWth.

Selon un autre mode de réalisation avantageux, le réacteur nucléaire comprend une deuxième virole agencée de manière concentrique à l'intérieur de la première virole, de sorte à guider le liquide combustible qui s'élève entre les deux zones où il est dévié.

Selon ce mode, l'intérieur de la deuxième virole définit avantageusement un espace dans lequel s'étendent des barres de contrôle et/ou de sûreté des réactions nucléaires. Autrement dit, cette deuxième virole forme une colonne débouchante agencée de manière coaxiale à l'intérieur de la première virole et au centre de la cuve de réacteur. Cette colonne centrale permet avantageusement d'orienter le liquide combustible ascendant ainsi guidé dans l'espace annulaire entre première et deuxième viroles, et de ménager un emplacement pour des barres de contrôle et/ou de sûreté.

De préférence, le diamètre extérieur de la deuxième virole est compris entre 5 et 30% le diamètre intérieur de la première virole.

De préférence encore, la première virole et le cas échéant la deuxième virole est(sont) fixée(s) par suspension au bouchon-couvercle fermant la cuve de réacteur. La première virole et le cas échéant la deuxième virole est(sont) de préférence en acier inoxydable ou en alliage à base nickel.

Dans le cadre de l'invention, le bouchon-couvercle du coeur peut être supporté ou formé intégralement avec la dalle de fermeture du réacteur formant la partie supérieure du puits de cuve.

Selon un autre mode de réalisation avantageux, le réacteur comprend au moins un déflecteur, de préférence sous la forme d'une portion de tore, agencé au-dessous et/ou au-dessus de la première virole de sorte à répartir le débit du liquide combustible à sel(s) fondu(s) dévié. Autrement dit, ce(s) déflecteur(s) torique(s) permettent d'optimiser la répartition du débit du liquide combustible au sein de la cuve de réacteur. Le(s) déflecteur(s) est(sont) de préférence en acier inoxydable ou en alliage à base de nickel.

Selon un autre mode de réalisation avantageux, la cuve de réacteur comprend un ciel, usuellement appelé ciel de pile, rempli d'un gaz inerte, tel que de l'argon, de l'hélium au-dessus du liquide combustible à sel(s) fondu(s). Ce ciel permet d'absorber la dilatation thermique du liquide sel combustible au sein de la cuve de réacteur, lorsqu'il subit une variation de niveau.

Selon une variante de construction avantageuse, l'(es) échangeur(s) de chaleur comprend un faisceau de tubes, de type à tubes à baïonnette, avec des tubes creux débouchant chacun à l'intérieur d'un tube borgne, définissant la partie d'échange avec le circuit secondaire, plongé sensiblement à la verticale au moins partiellement dans le liquide combustible à sel(s) fondu(s), les tubes creux débouchant étant reliés à un collecteur d'entrée et les tubes borgnes étant reliés à un collecteur de sortie du fluide secondaire. En tant qu'échangeur entre circuits primaire et secondaire, on peut envisager d'autres structures que des tubes à baïonnettes. Par exemple, on peut prévoir des Autres tubes en U, des tubes hélicoïdaux (à plaques), à la condition d'avoir des entrées et sorties vers le haut du réacteur et des faibles pertes de charge. Avantageusement, les collecteurs d'entrée et de sortie du fluide secondaire sont agencés dans le ciel de pile. Avec un tel agencement, on évite un contact direct entre ces collecteurs et le sel du circuit primaire, ce qui augmente leur durée de vie ainsi que la sécurité de fonctionnement des échangeurs, puisque la seule partie immergée reste une partie de le hauteur du faisceau de tubes.

Le réacteur nucléaire peut présenter l'une et/ou l'autre des caractéristiques dimensionnelles suivantes pour une puissance typiquement de 150MWth:
- le diamètre interne de la cuve de réacteur est compris entre 1,5 et 2m ;
- le hauteur du circuit primaire à l'intérieur de la cuve de réacteur est comprise entre 2,5 et 4m.

En fonctionnement du réacteur, la température du liquide combustible à sel(s) fondu(s) du circuit primaire peut être comprise entre 600 et 750°C.

De préférence, le fluide secondaire circulant dans l'(les) échangeur(s) est à base d'un mélange de sels fondus NaCl-MgCl₂, NaCl-MgCl₂- KCl ou encore le NaCl-MgCl₂- KCl-ZnCl₂.

Avantageusement, la température du fluide secondaire en entrée d'échangeur(s) est de l'ordre de 550°C tandis que sa température en sortie d'échangeur(s) étant de l'ordre de 600°C.

Le diamètre externe de l'autre cuve, remplie du sel liquide inerte peut être compris entre 2,8 et 3,2 m.

La puissance du réacteur nucléaire est avantageusement inférieure à 300 MWth, ce qui correspond à une gamme de puissance recherchée pour des réacteurs de type AMR.

Ainsi, l'invention consiste essentiellement à réaliser un réacteur nucléaire à sel(s) fondu(s) de type à neutrons rapides, dont l'architecture avec une cuve de réacteur exempte de modérateur ou tout du moins d'un modérateur permettant de qualifier un réacteur en tant que réacteur à neutrons thermiques, de forme axisymétrique entourée par une autre cuve à la périphérie de la cuve de réacteur qui délimite un espace inter-cuves rempli d'un sel liquide inerte qui sert de fluide caloporteur pour l'évacuation de la puissance résiduelle du réacteur par conduction à travers la cuve de réacteur.

En fonctionnement d'évacuation de la puissance résiduelle du réacteur, le réservoir de sel liquide inerte en périphérie de la cuve de réacteur remplit deux fonctions en permanence,
- un stockage thermique immédiat et complètement passif, soit une capacité d'inertie thermique;
- un système d'évacuation par l'intermédiaire d'échangeur(s) plongés dans l'espace inter-cuves en permanence, permettant une évacuation permanente entre 2 et 5% de la puissance thermique en fonctionnement nominal.

Au final, un réacteur nucléaire à sel(s) fondu(s), à neutrons rapides selon l'invention présente de nombreux avantages parmi lesquels on peut citer :
- la mise en oeuvre une cuve autour de la cuve de réacteur pour remplir l'espace inter-cuves par un sel liquide inerte afin de pouvoir faire évacuer la puissance résiduelle du réacteur;
- la possibilité d'une circulation uniquement par convection naturelle pour le circuit primaire avec la possibilité de mettre en oeuvre un seul échangeur entre circuits primaire et secondaire;
- la possibilité d'une simplification des circuits fluidiques par rapport aux solutions selon l'état de l'art avec notamment la suppression de toutes les tuyauteries et pompes requises dans les concepts MSFR cités en préambule ;
- la possibilité de dimensionner une cuve de réacteur intégrant un circuit primaire combustible de taille réduite, typiquement avec un diamètre inférieur à 2m, et une hauteur hors tout inférieure à 4m, ce qui rend le réacteur conforme aux exigences des réacteurs modulaires SMR. Ainsi, un circuit primaire avec une cuve de réacteur, la virole cylindrique intérieure et son échangeur primaire/secondaire selon l'invention peut être fabriqué en usine,
transporté sur site, puis utilisé dans la durée de vie du réacteur. Lors du démantèlement, un tel circuit pourrait être chargé entièrement dans un château de transport pour être traité de dans une usine adaptée. Autrement dit, l'invention permet de simplifier drastiquement la fabrication, le déploiement et le démantèlement d'un réacteur nucléaire à sel(s) fondu(s) de type à neutrons rapides, de petite et moyenne puissance ; - la possibilité d'utiliser une même architecture de circuit primaire avec une cuve de réacteur identique, seuls les viroles et réflecteurs neutroniques étant à adapter, pour différents liquides combustible à sel(s) fondu(s), et donc la possibilité de mettre à profit la versatilité offerte par la technologie de sels fondus à neutrons rapides.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 est une vue issue d'une simulation couplant la mécanique des fluides numérique (CFD) et la neutronique 3D, montrant la circulation du fluide primaire avec le champ des températures au sein d'un réacteur nucléaire à sel(s) fondu(s), de type à neutrons rapides selon l'invention.
[Fig 2] la figure 2 est une vue schématique en coupe longitudinale illustrant un échangeur à tube baïonnette, avec ses collecteurs d'entrée et de sortie, tel qu'il peut être agencé dans un réacteur selon l'invention.
[Fig 3] la figure 3 est une vue issue d'une simulation numérique comme selon la figure 1 pour un cas de simulation de réacteur selon l'invention dont le liquide combustible à sel(s) fondu(s) du circuit primaire est un mélange de NaCl, 25 % d'UCl3, 9% PuCl3 en proportions molaires en tant que sels, avec de l'uranium appauvri U235 à 0,7%.
[Fig 4] la figure 4 est une vue issue d'une simulation numérique comme selon la figure 1 pour un cas de simulation de réacteur selon l'invention dont le liquide combustible à sel(s) fondu(s) du circuit primaire est un mélange de NaCl, 34% d'UCl3 en proportions molaires, en tant que sels avec de l'uranium enrichi U235 (HALEU), en proportion 20%.
[Fig 5] la figure 5 est une vue schématique en coupe longitudinale d'un réacteur nucléaire à sel(s) fondu(s) à neutrons rapides selon l'invention montrant les circuits primaire, secondaire et tertiaire.

### Description détaillée

Dans l'ensemble de la présente demande, les termes « vertical », « inférieur », « supérieur», « bas », « haut », « dessous » et « dessus » sont à comprendre par référence par rapport à un réacteur nucléaire à sel(s) fondu(s) à neutrons rapides, tel qu'il est prévu en configuration verticale de fonctionnement selon l'invention.

Par « fluide primaire », « fluide secondaire », « fluide tertiaire », on entend le fluide qui constitue respectivement du circuit primaire, secondaire et tertiaire.

On précise que les différentes températures, puissances, volumes, débits ...indiqués le sont uniquement à titre indicatif. Par exemple, d'autres températures peuvent être envisagées selon les configurations notamment de puissance de réacteur à sel(s) fondu(s), de volume de liquide combustible à sel(s) fondu(s) de besoin de puissance pour l'application envisagée...

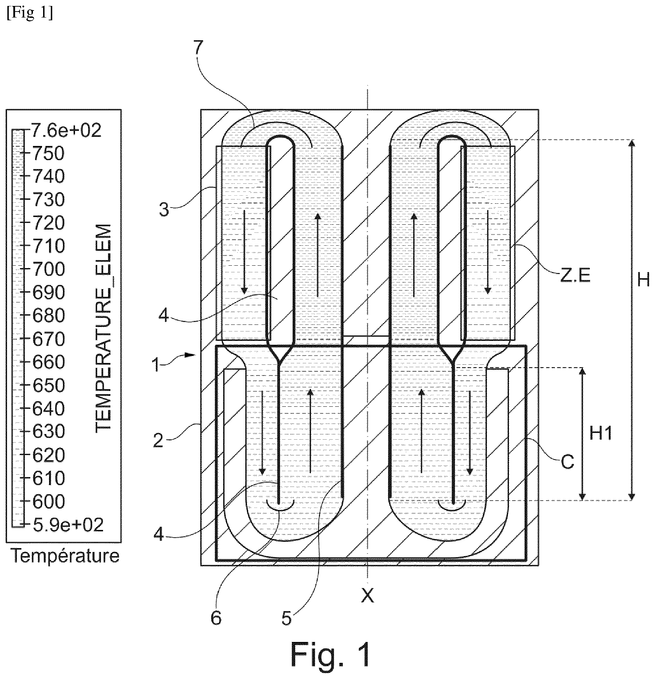

On décrit en référence à la figure 1, un réacteur nucléaire 1 à sel(s) fondu(s) de type à neutrons rapides, selon une configuration de circuit primaire selon un mode de réalisation de l'invention. Cette figure 1 est une vue de simulation numérique obtenue par un couplage de mécanique des fluides numériques (MFN ou CFD acronyme anglo-saxon pour « Computational Fluid Dynamics ») et de neutronique en 3D, comme explicité ci-après.

Le réacteur 1 d'axe central X comprend une cuve 2 à enveloppe métallique en acier inoxydable préférentiellement, d'une épaisseur de l'ordre de 10 à 20mm, et formée d'un fond de cuve hémisphérique et d'un cylindre vertical.

Cette cuve de réacteur 2 délimite intérieurement un circuit primaire de combustible sous forme liquide dans laquelle est fondu au moins un sel. L'intérieur de la cuve 2 est dénué de matériau modérateur. Autrement dit, le liquide combustible à sel(s) fondu(s) remplit et circule à l'intérieur de la cuve sans être modéré.

Un unique échangeur de chaleur 3 entre le circuit primaire du réacteur et un circuit secondaire est agencé à l'intérieur de la cuve de réacteur 2.

Une première virole 4, d'axe central confondu avec celui de la cuve de réacteur, est agencée dans la cuve de réacteur 2 pour séparer l'intérieur de celle-ci en une zone centrale et une zone périphérique dans laquelle est agencé l'échangeur de chaleur 3.

Dans cette configuration de la figure 1, la virole 4 est constituée d'une partie supérieure 40 en regard de la zone d'échange ZE qui est sous la forme d'un anneau cylindrique fermée sur lui-même, et d'une partie inférieure 41 en regard du coeur C qui est sous la forme d'un cylindre creux.

A titre d'exemple, pour une hauteur totale H égale à 2,5 m, la hauteur H1 de la partie inférieure 41 de la virole 4 est égale à 1m.

Une deuxième virole 5 est agencée de manière concentrique à l'intérieur de la première virole 4. L'intérieur de la deuxième virole 5 définit un espace dans lequel peuvent s'étendre des barres de contrôle et/ou de sûreté des réactions nucléaires.

Les viroles 4, 5 peuvent être en acier inoxydable ou en alliage à base nickel.

Les viroles 4, 5 sont avantageusement fixées par suspension au bouchon-couvercle fermant la cuve de réacteur 2.

En bas de la cuve de réacteur 2, au-dessous de la première virole 4, un premier déflecteur 6, sous la forme d'une portion de tore.

En haut de la cuve de réacteur 2, au-dessus de la première virole 4, un deuxième déflecteur 7, également sous la forme d'une portion de tore.

Comme symbolisé par les flèches en figure 1, avec les viroles 4, 5 et les déflecteurs 6, 7 tels qu'agencés, en fonctionnement du réacteur, le liquide combustible à sel(s) fondu(s), circule uniquement par convection naturelle selon une boucle depuis le bas de la zone centrale définissant le coeur de réacteur C au sein duquel les réactions de fission se produisent, à partir duquel il s'élève par échauffement jusqu'au haut de la zone centrale entre les viroles 4 et 5 où il est dévié par le déflecteur 7 vers le haut de la zone périphérique pour traverser l'échangeur 3 puis descend vers le bas de la zone périphérique où il est dévié par le déflecteur 7 vers le coeur du réacteur C.

La virole 5 permet de guider le liquide combustible qui s'élève entre les deux zones où il est dévié, c'est-à-dire dans la zone centrale du réacteur depuis la zone de déviation par le déflecteur 6 en passant par le coeur C jusqu'à la zone de déviation par le déflecteur 7.

Les déflecteurs 6, 7 par leurs formes et leur agencement permettent chacun de répartir le débit du liquide combustible à sel(s) fondu(s) dévié.

Un réflecteur neutronique 21 en carbure de silicium est agencé à la périphérie du coeur C contre la cuve de réacteur 2.

La configuration de la figure 1 est dédiée à un le liquide combustible à sel(s) fondu(s) du circuit primaire étant un mélange de NaCl-UCl3, de préférence en proportions de 25 à 30% mol, et de PuCl3, de préférence en proportions de 9 à 11% mol, en tant que sels, avec de l'uranium appauvri.

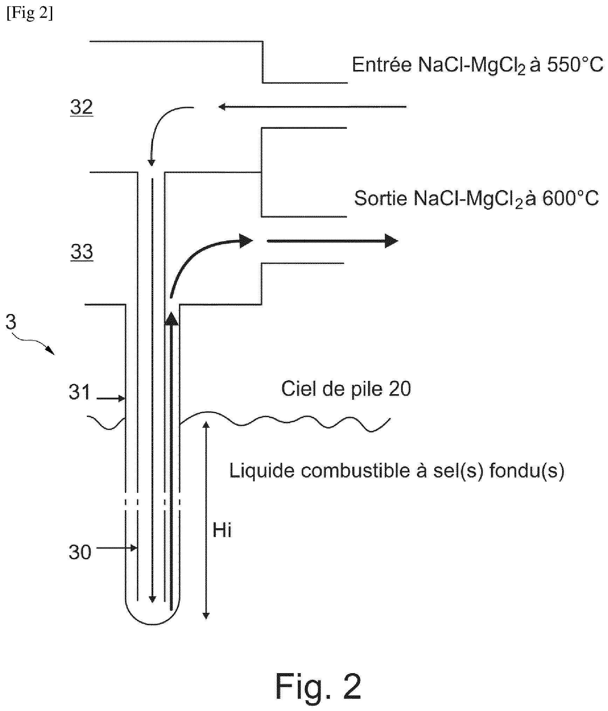

Comme illustré à la figure 2, la cuve de réacteur 2 comprenant un ciel, usuellement appelé ciel de pile 20, rempli d'un gaz inerte, tel que de l'argon, au-dessus du liquide combustible à sel(s) fondu(s).

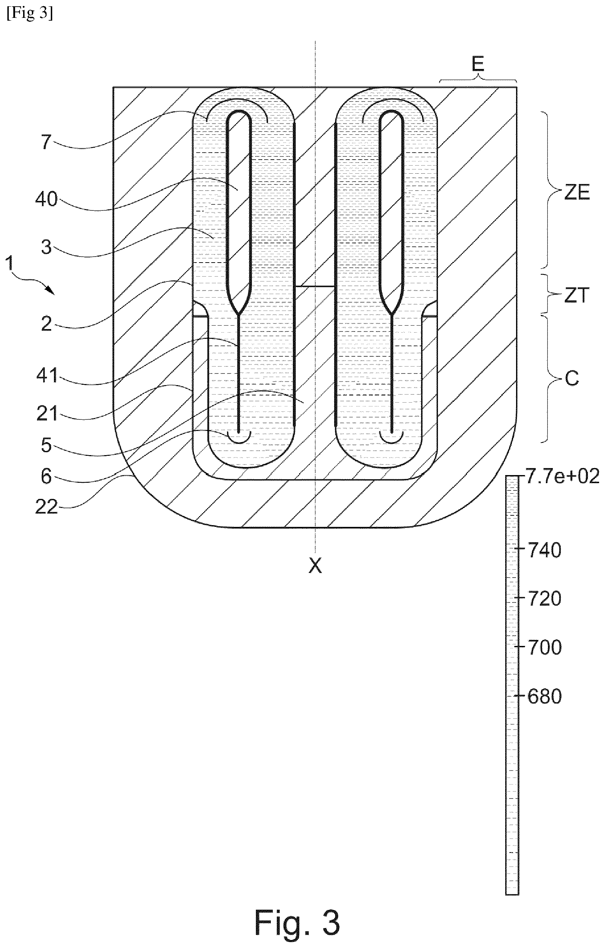

Selon l'invention, comme montré aux figures 3 et 4, une cuve externe 22 est agencée autour de la cuve de réacteur 2 en définissant un espace inter-cuves E rempli d'un sel liquide inerte sur le plan neutronique.

Le sel contenu dans l'espace inter-cuves peut être du NaCl et/ou MgCl.

L'unique échangeur de chaleur 3 comprenant un faisceau de tubes à baïonnette définissant la partie d'échange avec le circuit secondaire.

Comme illustré à la figure 2, chaque tube à baïonnette comprend un tube creux 30 débouchant chacun à l'intérieur d'un tube borgne 31.

Chaque tube 30, 31 est plongé sensiblement à la verticale dans le liquide combustible à sel(s) fondu(s) selon une hauteur partielle d'immersion Hi.

Chaque tube creux débouchant 30 est relié à un collecteur d'entrée 32 tandis que chaque tube borgne est relié à un collecteur de sortie 33 du fluide secondaire.

Les collecteurs d'entrée 32 et de sortie 33 du fluide secondaire sont avantageusement agencés dans le ciel de pile 20.

Les inventeurs ont réalisé des simulations de dimensionnement d'un réacteur 1, tel que celui montré à la figure 1.

Pour une composition de sel donnée, les inventeurs ont adapté la méthodologie de conception du circuit primaire de ce type comme suit :
Etape i/: détermination des températures minimales et maximales acceptables dans le sel fondu du liquide combustible. La température minimale est en général imposée pour limiter le risque de solidification du sel, tandis que celle maximale est imposée par les températures maximales admissibles par les matériaux.
Etape ii/: À partir de la puissance thermique visée pour le réacteur 1, détermination du débit du circuit primaire nécessaire pour respecter l'écart de température imposé à l'étape i/.
Etape iii/: Pour une hauteur de circuit primaire visée, imposée par exemple par des contraintes de transportabilité de la cuve de réacteur 2, détermination des sections de passages horizontales au niveau du coeur C et de l'échangeur 3 qui sont nécessaires pour obtenir le débit du circuit primaire visé à l'étape ii/.
Etape iv/: La section horizontale du coeur C étant connue, détermination de le hauteur de coeur C nécessaire par garantir sa criticité. Pour des coeurs de puissance élevée, soit de section large, une hauteur réduite peut s'avérer suffisante. A contrario, une puissance demandée faible peut conduire à un coeur de forme plus allongée.

En pratique, les inventeurs ont réalisé des calculs de prédimensionnement sur le circuit primaire d'un réacteur tel que montré à la figure 1 à partir d'outils de simulation numérique couplant la thermo hydraulique CFD, afin de déterminer les champs locaux de vitesse et de température et la neutronique en 3D, afin de déterminer l'atteinte de la criticité et la répartition spatiale de la puissance.

Le logiciel de simulation numérique CFD peut être celui connu sous la dénomination TrioCFD. Ce code TrioCFD a été développé par la Demanderesse et validé pour traiter efficacement divers problèmes physiques, tels que les écoulements turbulents, le couplage fluide/solide, les écoulements polyphasiques ou écoulements en milieu poreux : [4].

Le logiciel de simulation neutronique 3D peut être celui connu sous la dénomination ERANOS. Ce logiciel ERANOS a été développé et validé dans le but de fournir une base appropriée pour des calculs neutroniques fiables des coeurs de réacteurs à neutrons rapides avancés, existants ou futurs : [5]. Ce logiciel ERANOS a été développé dans années 1970 et validé dans le but de fournir un outil de calcul scientifique approprié pour des calculs neutroniques fiables des coeurs de réacteurs à neutrons rapides refroidis au sodium: [5].

La publication [6] est un exemple de dimensionnement par couplage de thermo hydraulique CFD avec une neutronique 3D.

Des itérations répétées sont nécessaires pour parvenir à une conception optimale.

Les caractéristiques dimensionnelles, de température et de puissance, et de liquide combustible à sels fondus obtenus sont les suivantes :
- puissance de 150 MWth ;
- température de fonctionnement du circuit primaire entre 600 et 750°C ;
- le liquide combustible à sels fondus du circuit primaire à choisir parmi un mélange de NaCl-UCl₃ de 25 à 30% mol-PuCl₃ de 9 à 11% mol avec de l'uranium appauvri à 0,7%, ou un mélange de NaCl-UCl₃ à 34% mol avec de l'uranium enrichi U235 à 20% ;
- pression atmosphérique à l'intérieur de la cuve de réacteur 2 ;
- comme montré aux figures 3 et 4, présence d'une autre cuve 22, agencée autour de la cuve de réacteur 2 en définissant un espace inter-cuves (E) rempli d'un sel liquide inerte sur le plan neutronique.

La figure 3 illustre un cas de réacteur 1 obtenu par la simulation numérique de couplage précitée, pour un liquide combustible à mélange de sels NaCl-25%UCl3-9%PuCl3 avec de l'uranium appauvri à 0,7%. Le réflecteur neutronique est en SiC.

Pour ce cas, les données obtenues sont les suivantes :
- diamètre interne de la cuve de réacteur 2 égal à 1,78m,
- diamètre externe de la cuve de réacteur 2 égale à 1,8m,
- hauteur de la cuve de réacteur 2 égal à 2,5m,
- hauteur du coeur C égale à 0,8 m,
- hauteur de la zone d'échange ZE égale à 1,5 m,
- hauteur de la zone de transition ZT, entre la zone d'échange ZE et le coeur C égale à 0,2 m,
- diamètre interne de l'anneau 40 de la virole 4 égal à 0,89 m,
- diamètre externe de l'anneau 40 de la virole 4 égal à 1,22 m,
- épaisseur du cylindre creux 41 de la virole 4 égal à 0,05 m,
- diamètre interne de l'échangeur 3 égal à 1,22 m,
- diamètre externe de l'échangeur 3 égal à 1,78 m,
- épaisseur du réflecteur neutronique égal à 0,145m,
- diamètre externe de la virole 5 égale à 0,32m,
- diamètre externe de la cuve périphérique 22 égal à 3m,
- hauteur de sel inerte dans l'espace inter cuves E égal à 3m,
- débit de liquide combustible au sein du coeur égal à 1856 kg/s avec un écart de température entre entrée et sortie du coeur C égal à 140°C ;
- volume de sel dissous égal à 3,55 m³ avec 901 kg de Pu fissile ;
- facteur de multiplication effectif des neutrons keff, qui exprime le facteur par lequel le nombre de fissions se trouve multiplié d'une génération de neutrons à la suivante égal à 1,005 +/- 0,2.

La figure 4 illustre un cas de réacteur 1 obtenu par la simulation numérique de couplage précitée, pour un liquide combustible à mélange de NaCl-UCl₃ à 34% mol avec de l'uranium U235 enrichi à 20%. Le réflecteur neutronique est en graphite.

Pour ce cas, les données obtenues sont les suivantes :
- diamètre interne de la cuve de réacteur 2 égal à 1,78m,
- diamètre externe de la cuve de réacteur 2 égale à 1, 8m,
- hauteur de la cuve de réacteur 2 égal à 2,5m,
- hauteur du coeur C égale à 0,8 m,
- hauteur de la zone d'échange ZE égale à 1,5 m,
- hauteur de la zone de transition ZT, entre la zone d'échange ZE et le coeur C égale à 0,2 m,
- diamètre interne de l'anneau 40 de la virole 4 égal à 0,89 m,
- diamètre externe de l'anneau 40 de la virole 4 égal à 1,22 m,
- diamètre interne de l'échangeur 3 égal à 1,22 m,
- diamètre externe de l'échangeur 3 égal à 1,78 m,
- épaisseur du réflecteur neutronique égal à 0,145m,
- diamètre externe de la virole 5 égale à 0,32m,
- diamètre externe de la cuve périphérique 22 égal à 3m,
- hauteur de sel inerte dans l'espace inter cuves E égal à 3m,
- débit de liquide combustible au sein du coeur égal à 1750 kg/s avec un écart de température entre entrée et sortie du coeur C égal à 150°C ;
- volume de sel dissous égal à 2,95 m³ avec 997 kg de Pu fissile ;
- facteur de multiplication effectif des neutrons keff, égal à 1,008 +/- 0,2.

Tous les composants (cuves 2, 22, viroles 4, 5, échangeur 3) sont en acier inoxydables pour les configurations des figures 3 et 4.

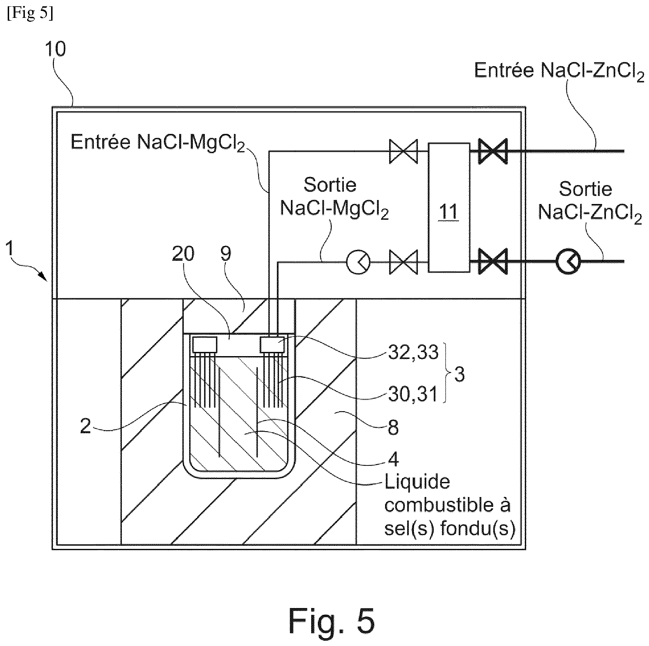

La figure 5 illustre un exemple d'intégration du réacteur 1 qui vient d'être décrit au sein d'un bâtiment réacteur 10 et les circuits secondaire et tertiaire.

Le fluide secondaire est constitué par un mélange de sels NaCl-MgCl₂ qui entre par convection forcée dans l'échangeur 3 à 550°C et en ressort à 600°C.

L'échangeur 11 entre circuit secondaire et tertiaire est au sein du bâtiment réacteur 10.

Le fluide tertiaire est constitué par un mélange de sels NaCl-ZnCl₂ qui entre par convection forcée dans l'échangeur 11 à 500°C et en ressort à 550°C.

L'invention n'est pas limitée aux exemples qui viennent d'être décrits ; on peut notamment combiner entre elles des caractéristiques des exemples illustrés au sein de variantes non illustrées.

D'autres variantes et modes de réalisation peuvent être envisagés sans pour autant sortir du cadre de l'invention.

En tant qu'échangeur entre circuits primaire et secondaire, on peut envisager d'autres structures que des tubes à baïonnettes. Par exemple, on peut prévoir des tubes en U, des tubes hélicoïdaux (à plaques), à la condition d'avoir des entrées et sorties vers le haut du réacteur et des faibles pertes de charge.

D'autres sels liquides neutres que NaCl ou MgCl peuvent être envisagés dans le cadre de l'invention.

### Liste des références citées

[1]: E. Merle-Lucotte, M. Allibert, M. Brovchenko, D. Heuer, V. Ghetta, A. Laureau, P.Rubiolo, Chapitre "Introduction to the Physics of Thorium Molten Salt Fast Reactor (MSFR) Concepts", Thorium Energy for the World, Springer International Publishing, Switzerland (2016).
[2]: https://www.irsn.fr/en/newsroom/news/documents/irsn report-geniv 04-2015.pdf
[3]: Jiri Krepel et al. "Self-Sustaining Breeding in Advanced Reactors: Characterization of Selected Reactors", Encyclopedia of Nuclear Energy 2021, Pages 801-819. https://www.sciencedirect.com/science/article/pii/B9780128197257001239?via%3Dihub
[4]: Pierre-Emmanuel Angeli et al. "OVERVIEW OF THE TRIOCFD CODE: MAIN FEATURES, V&V PROCEDURES AND TYPICAL APPLICATIONS TO NUCLEAR ENGINEERING". NURETH-16, Chicago, IL, August 30-September 4, 2015.
[5]: G.Rimpault,et al. "The ERANOS Code and data system for fast reactor neutronic analyses." PHYSOR2002-International Conférence on the New Frontiers of Nuclear Technology: Reactor Physics, Safety and High-Performance Computing, Oct 2002, Seoul, SouthKorea.
[6]: Marco Tiberga et al. "Results from a multi-physics numerical benchmark for codes dedicated to molten sait fast reactors", Annals of Nuclear Energy 142 (2020) 107428.

## Revendications

1. Réacteur nucléaire (1) à sel(s) fondu(s), de type à neutrons rapides, comprenant :
- une cuve de réacteur (2) axisymétrique autour d'un axe central, délimitant intérieurement un circuit primaire de combustible sous forme liquide dans laquelle est fondu au moins un sel, l'intérieur de la cuve étant dénué de matériau modérateur;
- une autre cuve (22), agencée autour de la cuve de réacteur en définissant un espace inter-cuves (E) rempli d'un sel liquide inerte.

2. Réacteur nucléaire (1) à sel(s) fondu(s) selon la revendication 1, le sel liquide inerte étant choisi parmi le NaCl, MgCl, KCl, ZnCl2, PbCl2 ou un mélange de ceux-ci.

3. Réacteur nucléaire à sel(s) fondu(s) selon l'une des revendications précédentes, comprenant en outre :
- au moins un échangeur de chaleur (3) entre le circuit primaire du réacteur et un circuit secondaire, agencé à l'intérieur de la cuve de réacteur ;
- une première virole (4) sous la forme d'au moins un cylindre creux (40, 41), d'axe central confondu avec celui de la cuve de réacteur, la première virole étant agencée dans la cuve de réacteur pour séparer l'intérieur de celle-ci en une zone centrale et une zone périphérique dans laquelle est agencé l'échangeur de chaleur de sorte qu'en fonctionnement du réacteur, le liquide combustible à sel(s) fondu(s), circule par convection naturelle selon une boucle depuis le bas de la zone centrale définissant le coeur de réacteur (C) au sein duquel les réactions de fission se produisent, à partir duquel il s'élève par échauffement jusqu'au haut de la zone centrale où il est dévié vers le haut de la zone périphérique pour traverser l'échangeur (Z.E) puis descend vers le bas de la zone périphérique où il est dévié vers le coeur du réacteur ;
- un réflecteur neutronique (21), agencé à la périphérie du coeur contre la cuve du réacteur, pour assurer le maintien du flux neutronique dans le coeur.

4. Réacteur nucléaire à sel(s) fondu(s) selon la revendication 3, dans lequel :
- le liquide combustible à sel(s) fondu(s) du circuit primaire étant un mélange de NaCl-UCl3, de préférence en proportions de 25 à 30% mol, et de PuCl3, de préférence en proportions de 9 à 11% mol, en tant que sels, avec de l'uranium naturel,
- la partie de la première virole agencée au-dessus de l'(des) échangeur(s) est un anneau cylindrique fermé sur lui-même tandis que la partie agencée au-dessous de l'(des) échangeur(s) est un cylindre creux,
- le réflecteur neutronique est en carbure de silicium (SiC).

5. Réacteur nucléaire à sel(s) fondu(s) selon la revendication 3, dans lequel :
- le liquide combustible à sel(s) fondu(s) du circuit primaire étant un mélange de NaCl-UCl₃, de préférence à 34% mol, en tant que sel avec de l'uranium enrichi U235 (HALEU), de préférence en proportions de 5 à 20%.
- la première virole est un anneau cylindrique (40) fermé sur lui-même,
- le réflecteur neutronique est graphite

6. Réacteur nucléaire à sel(s) fondu(s) selon l'une des revendications 3 à 5, comprenant une deuxième virole (5) agencée de manière concentrique à l'intérieur de la première virole, de sorte à guider le liquide combustible qui s'élève entre les deux zones où il est dévié

7. Réacteur nucléaire à sel(s) fondu(s) selon la revendication 6, l'intérieur de la deuxième virole définissant un espace dans lequel s'étendent des barres de contrôle et/ou de sûreté des réactions nucléaires.

8. Réacteur nucléaire à sel(s) fondu(s) selon l'une des revendications précédentes, le diamètre externe de l'autre cuve, remplie du sel fertile liquide étant compris entre 2,8 et 3,2m.

9. Réacteur nucléaire à sel(s) fondu(s) selon l'une des revendications précédentes, le diamètre externe de la cuve de réacteur étant compris entre 1,5 et 2m.

10. Réacteur nucléaire à sel(s) fondu(s) selon l'une des revendications précédentes, le hauteur du circuit primaire à l'intérieur de la cuve de réacteur étant comprise entre 2,5 et 4m

11. Réacteur nucléaire à sel(s) fondu(s) selon l'une des revendications précédentes, en fonctionnement du réacteur, la température du liquide combustible à sel(s) fondu(s) du circuit primaire étant comprise entre 600 et 750°C.

12. Réacteur nucléaire à sel(s) fondu(s) selon l'une des revendications précédentes, le fluide secondaire circulant dans l'(les) échangeur(s) étant à base d'un mélange de sels fondus d'un mélange de sels fondus NaCl-MgCl2 ou NaCl-MgCl2-KCl ou NaCl-MgCl2-KCl-ZnCl2.

13. Réacteur nucléaire à sel(s) fondu(s) selon la revendication 12, la température du fluide secondaire en entrée d'échangeur(s) étant de l'ordre de 550°C tandis que sa température en sortie d'échangeur(s) étant de l'ordre de 600°C

14. Réacteur nucléaire à sel(s) fondu(s) selon l'une des revendications précédentes, dont la puissance est inférieure à 300 MWth.
